# FASCICULE DE BREVET EUROPEEN

(11) **EP 2 455 434 B1**
(45) Date de publication et mention de la délivrance du brevet: **23.10.2013**
(21) Numéro de dépôt: 12155678.1
(22) Date de dépôt: 20.03.2009
(51) Int. Cl.: C09J 9/00, C09J 11/06

(54) **Composition pour adhésif structural**
Zusammensetzung für Strukturkleber
Composition for a structural adhesive

(30) Priorité: 21.03.2008 FR 0801553
(43) Date de publication de la demande: 23.05.2012
(62) Demande divisionnaire de: 09722914.0
(73) Titulaire: Jacret, 95500 Le Thillay (FR)
(72) Inventeur: Curet, Arnaud, 60300 Senlis (FR)
(74) Mandataire: Flesselles, Bruno F.G.

(56) Documents cités:
- WO-A-98/34980
- WO-A-03/086327
- DATABASE WPI Week 200754 Thomson Scientific, London, GB; AN 2007-552421 XP002513328, & JP 2007 169560 A (DENKI KAGAKU KOGYO KK) 5 juillet 2007 (2007-07-05)

## Description

La présente invention se rapporte au domaine des adhésifs structuraux acryliques (à base d'acrylate ou de méthacrylate) et à leurs applications.

Les adhésifs structuraux sont une bonne alternative aux autres techniques mécaniques pour lier entre eux deux matériaux, tels les métaux ou les plastiques. En effet, la répartition de force est meilleure par collage que lorsque l'on utilise des techniques alternatives telles que le rivetage ou la soudure. De plus, l'utilisation du collage permet souvent de travailler plus rapidement, et présente également l'avantage de proposer une meilleure isolation contre des éléments externes (poussière, humidité) que les technologies mécaniques.

Les adhésifs structuraux sont formés de deux éléments : une composition contenant l'agent polymérisant (à base d'acrylate ou de méthacrylate) et un agent catalyseur permettant la polymérisation et la prise de l'adhésif. Ces deux éléments sont stockés dans deux compartiments différents et sont mélangés lors de l'application de l'adhésif. Cet agent catalyseur est un initiateur de polymérisation à radicaux libres, en particulier à base de peroxyde, et est bien connu dans l'art.

Les compositions contenant l'agent polymérisant contiennent également d'autres éléments, tels qu'un accélérateur de polymérisation, un agent de rhéologie, ou un promoteur d'adhésion.

L'accélérateur de polymérisation sert à favoriser la polymérisation et le durcissement de l'adhésif lorsque l'on rajoute le catalyseur. On connaît dans l'art l'utilisation d'amines tertiaires, préférentiellement aromatiques, telle que la diméthyl para-toluidine (DMPT), et/ou le 2,2'-(p-tolylimino)diéthanol ou la diméthylaniline (DMA).

Ces accélérateurs de polymérisation permettent d'obtenir un taux de polymérisation élevé de l'adhésif et d'en améliorer ses performances mécaniques et sa tenue en environnement difficile.

De telles amines tertiaires sont notamment décrites dans les brevets US 4,223,115 et EP 894 119.

Toutefois, ces amines présentent certains désavantages, notamment en ce qui concerne les paramètres de polymérisation (montée en gel, exothermie) qui les rend impropres à certaines applications industrielles.

Dans le cadre de la présente invention, les inventeurs ont substitué cette catégorie d'amine tertiaire par une autre catégorie d'amine tertiaire à haut poids moléculaire moins toxique, telle que décrite dans WO 03/086327, qui permet de conserver les propriétés mécaniques et de tenue dans le temps grâce à un niveau de polymérisation tout aussi élevé.

Ainsi, les amines utilisées dans le cadre de l'invention ne sont pas toxiques, peuvent être utilisées à un dosage plus faible que les amines de l'art antérieur, et réagissent totalement avec l'initiateur de polymérisation à radicaux libres. Par ailleurs, de façon surprenante, de telles amines améliorent la rapidité de montée en gel des adhésifs, par rapport aux amines de l'art antérieur. Ceci permet d'utiliser des adhésifs structuraux dans des applications nouvelles, telles que décrites ci-après.

Le document WO 98/34980 décrit l'utilisation d'amines telles qu'utilisables dans le cadre de la présente invention, en tant que marqueur de polymérisation du fait du changement de couleur de l'amine au cours de la polymérisation. Les compositions décrites dans ce document comprennent ainsi également un agent réducteur pour initier la polymérisation par génération de radicaux libres après interaction avec un agent oxydant.

Le document JP 2007 169560 décrit l'utilisation d'amines telles qu'utilisables dans le cadre de la présente invention, pour colorer lors de la polymérisation, un initiateur de polymérisation étant utilisé par ailleurs.

Ainsi, l'invention se rapporte à une composition utilisable dans un adhésif structural, ledit adhésif structural étant formé de ladite composition et d'un agent catalyseur comprenant un amorceur de polymérisation radicalaire de type peroxyde, ladite composition comprenant :
(a) au moins un monomère ester méthacrylate
(b) un promoteur d'adhésion à base d'ester de phosphate
(c) un accélérateur de polymérisation comprenant une amine tertiaire de formule I : 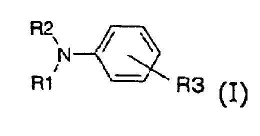 dans laquelle :
   - le groupe R3 est un groupe électro-donneur par résonance comprenant au moins un groupe aromatique qui est susceptible de former avec le radical : 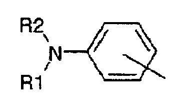
   et en combinaison avec ledit amorceur de polymérisation radicalaire, un système conjugué présentant une absorption dans le domaine visible du spectre électromagnétique, pour générer une coloration dudit polymère ou dudit ciment au cours de la réaction de polymérisation dudit monomère,
   - les groupements R1 et R2 sont respectivement et indépendamment :
      - des groupes alkyle en C1 à C16, de préférence en C1 à C5, linéaires ou ramifiés,
      - des groupes aryle ou arylalkyle en C5 à C30, de préférence en C5 à C10,
      - des groupes alkylidène en C2 à C15, de préférence en C2 à C5.

Dans un mode de réalisation préféré, ledit groupement R3 comprend au moins une amine tertiaire liée à un groupe aromatique, ce qui permet notamment d'améliorer l'activation. Ainsi, la composition selon l'invention contient des polyamines tertiaires, les groupements amine tertiaire étant portés par des groupes aromatiques. Cette architecture particulière permet de colorer l'adhésif durant la phase de polymérisation.

Dans un mode de réalisation préféré, le groupement R3 comprend au moins deux amines tertiaires liées à deux groupes aromatiques distincts et est notamment de la forme : 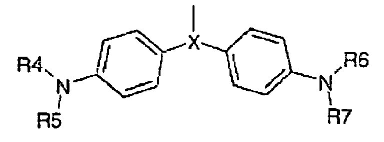 dans laquelle :
- X est choisi parmi : CH, N, et
- R4, R5, R6 et R7 sont choisis parmi :
   - les groupes alkyle en C1 à C16, de préférence en C1 à C5, linéaires ou ramifiés,
   - les groupes aryle ou arylalkyle en C5 à C30, de préférence en C5 à C10,
   - les groupes alkylidène en C2 à C15, de préférence en C2 à C5.

On préfère particulièrement utiliser, en tant qu'accélérateur de polymérisation dans le cadre de l'invention, une polyamine répondant à la formule :

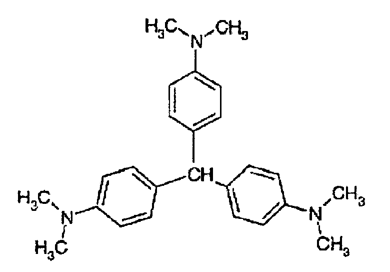

Cette triamine tertiaire est la 4,4',4" méthylidynetris (N, N-diméthylaniline). On l'appelle également « leuco cristal-violet », « leuco » ou « LCV ». La symétrie de la molécule et la présence de trois sites actifs possibles pour activer l'amorceur de polymérisation radicalaire rend cette polyamine particulièrement préférée pour la mise en oeuvre de l'invention.

D'autres amines répondant à la formule (I) sont décrites dans WO 03/086327. Ces polyamines de haut poids moléculaire peuvent également être pour produire une composition selon l'invention. On peut également mélanger plusieurs polyamines dans une composition selon l'invention, ou rajouter d'autres activateurs de polymérisation, bien que, dans un mode de réalisation particulier, la composition ne comprenne pas d'autres activateurs de polymérisation que les amines de formule (I).

On peut utiliser un activateur de formule (I) qui est une diamine tertiaire de formule (I) dans laquelle le groupement R3 est de la forme : 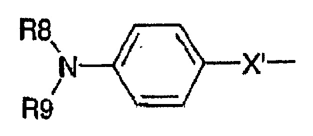 où - X' est choisi parmi : CH₂, O, O-C₆H₄-O, N-H, N-R et
- R8, R9 et R sont respectivement et indépendamment :
   des groupes alkyle en C₁ à C₁₆, de préférence en C₁ à C₅, linéaires ou ramifiés,
   des groupes aryle ou arylalkyl en C₅ à C₃₀, de préférence enC₅ àC₁₀,
   des groupes alkylidène en C₂ à C₁₅, de préférence en C₂ à C₅.

L'activateur de formule (I) peut également être choisie de telle sorte que R3 soit de la forme 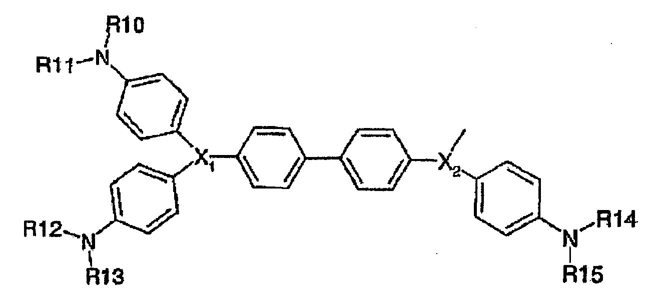
- X₁ et X₂ étant choisis parmi : N et CH,
- R10 à R15 étant indépendamment :
   des groupes alkyle en C₁ à C₁₆, de préférence en C₁ à C₅, linéaires ou ramifiés,
   des groupes aryle ou arylalkyl en C₅ à C₃₀, de préférence en C₅ à C₁₀,
   des groupes alkylidène en C₂ à C₁₅, de préférence en C₂ à C₅,
      ladite composition contenant également un monomère acrylate métallique (e).

L'accélérateur de polymérisation est ajouté dans une quantité entre 0,1 et 2 % en poids dans la composition, de préférence entre 0,2 et 1,5 % en poids.

Dans le cadre de la composition selon l'invention, on préfère que le promoteur d'adhésion à base d'ester de phosphate soit méthacrylé. En particulier, on utilise un promoteur d'adhésion à base d'ester de phosphate qui est l'ester phosphate 2-hydroxyéthyl de méthacrylate. Il peut notamment être obtenu sous le nom de Genorad 40 (Rahn AG, Zürich, Suisse). De tels promoteurs d'adhésion sont bien connus dans l'art, et sont notamment décrits dans US 4,223,115. On peut ainsi citer le 2-méthacryloyloxyethyl phosphate, le bis-(2-méthacryloyloxyethyl phosphate), le 2-acryloyloxyethyl phosphate, le bis-(2-acryloyloxyethyl phosphate), le méthyl-(2-méthacryloyloxyethyl phosphate), l'éthyl-(2-méthacryloyloxyethyl phosphate), un mélange d'esters mono and di-phosphate de 2-hydroxyéthyl de méthacrylate (notamment celui connu sous le nom de T-Mulz 1228 (Harcros Organics, Kansas City, US)) et les composés apparentés ou dérivés. On ajoute entre 1 et 6 % en poids de ce promoteur d'adhésion, de préférence entre 2 et 4 %.

L'utilisation combinée d'un promoteur d'adhésion et d'une polyamine tertiaire de haut poids moléculaire selon l'invention permet en effet d'accélérer la montée en gel par rapport à l'utilisation d'un même promoteur d'adhésion et d'une amine de l'art antérieur à faible poids moléculaire.

Dans un mode de réalisation préféré, le monomère ester (a) est un monomère méthacrylate. On choisit de préférence un monomère méthacrylate dans lequel la partie alcool présente une chaîne linéaire courte (c'est-à-dire ayant un ou deux atomes de carbones). Ainsi, les monomères préférés selon l'invention sont le méthacrylate de méthyle et le méthacrylate d'éthyle.

Dans un autre mode de réalisation, la partie alcool présente au moins un cycle, qui peut être substitué ou non. Ainsi, dans ce mode de réalisation, les monomères peuvent notamment être choisis parmi le méthacrylate de tétrahydrofurfuryle, le méthacrylate de phénoxyéthyle, le méthacrylate d'isobornyle, le méthacrylate de glycidylether, le méthacrylate de benzyle, le méthacrylate de cyclohexyle, le méthacrylate de triméthylcyclohéxyle, le méthacrylate d'hydroxyéthyle.

Des mélanges de ces esters peuvent également être utilisés. Le pourcentage en poids d'ester méthacrylate dans la composition est préférentiellement compris entre 20 et 80 %, de façon plus préférée entre 30 à 65 %, de façon encore plus préférée de 39 à 58 % soit environ autour de 50 %.

Ainsi que mentionné plus haut, l'utilisation d'accélérateurs de polymérisation dans les compositions selon l'invention permet d'accélérer la montée en gel des adhésifs utilisant de telles compositions, et de modifier le pic d'exothermie. Il peut toutefois être intéressant de contrôler cette montée en gel, et de la retarder. Cela peut être réalisé par l'ajout, à une composition selon l'invention, d'une amine (d) choisie dans le groupe des anilines, toluidines et phénols, substitués ou non. On préfère notamment les para-toluidines de formule :

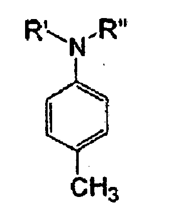

Les groupes R' et R" utilisables sont en particulier des groupes alkyles en C₁ à C₆, des groupes OH, des groupes OCₙH₂ₙ₊₁ avec n inférieur ou égal à 4, des groupes OOCCH3 ou similaires, des groupes OR dans lequel R est un alkyle en C₁ à C₆. Des amines (d) particulièrement adaptées sont notamment les N,N-bis-(2-hydroxyethyl)-p-toluidine, N-méthyl-N-hydroxyethyl-p-toluidine ou la N,N-bis-(2-hydroxyéthyl)-3-méthylaniline, ou le 2,4,6-tri(diméthylaminométhyl) phénol. La quantité de ces amines dans la composition est comprise entre 0,5 et 3 % en poids.

La composition contient un monomère acrylate ou méthacrylate métallique (e) (sel métallique (ou assimilé) d'acide acrylique ou méthacrylique), et notamment à base de zinc. La présence de ce composé dans la composition permet notamment d'améliorer les performances mécaniques de l'adhésif, ainsi que de jouer sur les temps de gel et/ou d'exothermie. En tant que composé (e), on peut notamment utiliser des monomères diacrylate de zinc, diméthacrylate de zinc, monométhacrylate de zinc, diacrylate de fer, diméthacrylate de fer, monométhacrylate de fer, diacrylate de calcium, diméthacrylate de calcium, monométhacrylate de calcium, diacrylate de magnésium, diméthacrylate de magnésium, monométhacrylate de magnésium. La quantité de ce sel dans la composition est comprise entre 0,5 et 3 % en poids.

Il est favorable que la composition contienne également au moins un élastomère (f). Si besoin est, il est fonctionnalisé (présentant une double liaison à ses extrémités, en particulier des fonctions méthacrylate pour améliorer les liaisons avec les monomères). Dans certains cas, on choisit un élastomère liquide. On utilise de préférence au moins un élastomère fonctionnalisé, seul ou en mélange avec au moins un élastomère non-fonctionnalisé.

Lorsque la composition contient un ou plusieurs copolymères bloc élastomériques (voir ci-dessous), l'élastomère (f) est choisi de telle sorte qu'il soit compatible en solution avec les copolymères blocs utilisés. En particulier, on le choisit tel que son paramètre de solubilité d'Hildebrand soit compatible avec les paramètres de solubilité d'Hildebrand des copolymères blocs utilisés. En particulier, on le choisit de telle sorte que sa valeur ne diffère pas de plus de 10 % de la moyenne des valeurs des paramètres de solubilité d'Hildebrand des copolymères bloc utilisés (par exemple 8,3 (cal.cm⁻³)^{1/2} pour le SIBS MD6455). Le paramètre de solubilité d'Hildebrand est bien connu et se calcule par la racine carrée de la densité d'énergie cohésive du composé. Le paramètre de solubilité d'Hildebrand est directement lié aux forces de dispersion (forces de Van der Waals) qui s'exercent entre les molécules d'une substance chimique. En particulier, le paramètre de solubilité d'Hildebrand (exprimé en cal^{1/2}cm^{-3/2}) de l'élastomère (h) est compris entre 8 et 9 (entre 16 et 19 lorsque l'on exprime les paramètres de solubilité en MPa^{1/2}). On utilise ainsi de préférence des élastomères de type homopolymères polybutadiène (que l'on choisit alors préférentiellement liquide et fonctionnalisé), polyisoprène. On peut également utiliser du polychloroprène (Neoprène AD10, DuPont, USA). On peut également utiliser des élastomères copolymères butadiène-acrylonitrile notamment fonctionnalisés. Les fonctionnalités sont portées par les chaînes terminales et les groupements fonctionnels utilisables sont des groupements carboxyle (COOH), amine (NH or NH2), méthacrylate vinyliques ou époxy.

On peut ainsi utiliser un polybutadiène fonctionnalisé tel que le HYPRO™ VTB 2000x168 (terminaisons vinyliques), seul ou en mélange avec un polychloroprène ou un polybutadiène non-fonctionnalisé tel que le HYPRO™ CTB 2000x162 (terminaisons carboxyles) (Emerald Performance Materials (EPM), Cuyahoga Falls, Ohio, USA). On peut également utiliser les HYPRO™ VTBNX ou CTBNX (copolymères butadiène - acrylonitrile) ayant respectivement des fonctionnalités carboxyle et vinyliques, et plus particulièrement les HYPRO™ VTBNX 1300x43 ou 1300x33.

Cet élastomère (f) est favorablement présent à une quantité comprise entre 4 et 30 % en poids dans la composition selon l'invention, de préférence entre 6 et 15 %, de façon plus préférée entre 8 et 12 %. On utilise une quantité moindre d'élastomère lorsque la composition contient un ou plusieurs copolymères bloc (voir ci-dessous).

Dans un mode de réalisation particulier, la composition contient en outre un copolymère bloc élastomérique contenant du styrène et au moins un second monomère (g). On choisit avantageusement ledit second monomère du copolymère bloc élastomérique (g) parmi l'isoprène, le butadiène et l'éthylène. En particulier, le copolymère bloc (g) est choisi parmi un copolymère bloc contenant du styrène et de l'isoprène, un copolymère bloc élastomérique contenant du styrène et du butadiène ou de l'éthylène, et les mélanges de ceux-ci.

La composition selon l'invention peut aussi contenir un mélange de différents copolymères bloc. Ainsi, dans un autre mode de réalisation, elle comprend un copolymère bloc styrène - isoprène - styrène (SIS) (g) et au moins un copolymère bloc contenant du styrène et du butadiène ou de l'éthylène (h).

Lorsqu'il contient du butadiène, ce copolymère bloc (h) peut être un styrène - butadiène - styrène (SBS) ou un copolymère styrène - isoprène - butadiène - styrène (SIBS) tel le Kraton MD6455 (entreprise Kraton Polymers) décrit par Dr. Donn DuBois et al., au congrès Adhesives & Sealants Council Meeting, Louisville, KY, 9-12 octobre 2005.

Lorsqu'il contient de l'éthylène, ce copolymère bloc (h) peut être un SEBS (copolymère styrène-éthylène/butylène-styrène) ou un SEPS (copolymère styrène-éthylène/propylène-styrène). Ces composés sont disponibles dans la gamme Kraton G (Kraton Polymers).

Dans le mode de réalisation préférée de l'invention, le copolymère bloc (h) contient du butadiène.

De manière préférée, le styrène est présent dans une proportion comprise entre 15 et 50 %, de façon plus préférée entre 22 et 40 %, de façon encore plus préférée environ 28-33 % en poids du copolymère SBS. Il est présent dans une proportion comprise entre 12 et 24 %, de manière plus préférée à environ 18-19 % en poids dans les copolymères SIS ou SIBS.

De préférence, la composition contient un mélange d'un SIS et d'un SIBS dans une proportion de variant de 4 : 1 (en poids dans la composition) à 1,5 : 1. La proportion préférée de SIS par rapport au SIBS est d'environ 3 : 1 ou 3,3 : 1. On peut toutefois également utiliser un mélange de SIS et de SBS dans les mêmes proportions relatives que le mélange SIS / SIBS. On peut également utiliser un mélange de SIS, SIBS et SBS. On peut également rajouter un autre copolymère bloc à l'un de ces mélanges.

Les copolymères blocs SIS, SBS ou SIBS utilisables selon l'invention sont bien connus de l'homme du métier. Ils sont notamment produits par l'entreprise Kraton Polymers (Houston, Texas, USA). Ainsi, on peut utiliser le SIS Kraton D1160 décrit dans US 20050238603 ou le Kraton D1161, le SBS Kraton D1102 décrit dans US 5,106,917 et le SIB S Kraton MD6455 ou Kraton MD 6460.

L'homme du métier sait sélectionner les copolymères blocs SIS, SIBS, SBS utilisables dans la composition selon l'invention, parmi ceux existants, en fonction notamment de leur facilité de dissolution dans les monomères utilisés, ou de leur résistance mécanique en traction.

De préférence, la composition selon l'invention comprend entre 5 et 30 % en poids, de préférence entre 12 et 25 %, de façon plus préférée entre 15 et 25 %, du ou des copolymère(s) bloc élastomérique(s).

Dans un mode de réalisation particulier, la composition selon l'invention contient un copolymère bloc élastomérique contenant du styrène et de l'isoprène et au moins un copolymère bloc élastomérique contenant du styrène et du butadiène, soit un mélange SIS / SIBS, un mélange SIS / SBS, ou un mélange SIS / SIBS / SBS.

Dans un autre mode de réalisation, la composition selon l'invention contient un seul copolymère bloc élastomérique, contenant du styrène et de l'isoprène, soit un SIS.

Dans un autre mode de réalisation, la composition selon l'invention contient un seul copolymère bloc élastomérique, contenant du styrène et du butadiène, choisi parmi un SIBS ou un SBS.

Si la composition contient un ou plusieurs copolymères bloc, les proportions relatives du mélange copolymères bloc ((g) et/ou (h)) et de l'élastomère (f) sont comprises entre 4 : 1 et 0,5 : 1 en poids dans la composition, de préférence d'environ 2 : 1. Toutefois, on peut également avoir des proportions relatives de l'ordre d'environ 0,5 : 1.

La composition selon l'invention peut également contenir des particules polymériques élastomériques (i). Ces particules sont appelées « core-shell » en anglais, sont bien connues de l'homme du métier, et sont formées d'une coquille thermoplastique « dure », préférentiellement à base de polyméthacrylate de méthyle (PMMA), et d'un coeur élastomérique généralement à base de butadiène, souvent copolymérisé avec du styrène, ou à base acrylique. On peut notamment citer, dans la mise en oeuvre de l'invention, les polymères acrylonitrile-butadiène-styrène (ABS), méthacrylate-butadiène-styrène (MB S), méthacrylate-acrylonitrile-butadiène-styrène (MAB S), méthacrylate-acrylonitrile et les mélanges de ceux-ci.

Ces particules contiennent un coeur élastomérique réticulé, entouré d'une coquille thermoplastique, souvent un polymère de méthacrylate de méthyle (PMMA). Les brevets US 3,985,703, US 4,304,709, US 6,433,091, EP 1256615 ou US 6,869,497 décrivent notamment de telles particules, qui sont ainsi bien connues de l'homme du métier.

On préfère notamment des particules modificatrices d'impact, et en particulier les MBS modificateurs d'impact (MBS impact modifiers). Dans un mode de réalisation préféré, ces MBS présentent une faible réticulation du polymère formant le coeur. De plus, ces MBS, outre leur résistance à l'impact, présentent également de préférence une résistance au craquement induit par les chocs.

Les polymères core-shell sont disponibles auprès de multiples entreprises. On peut ainsi citer GE Plastics ou Arkema (Paris, France). Les particules préférées sont notamment de type Clearstrength C301, C303H, C223, C350, C351, E920 ou C859 d'Arkema, les MBS C301 et C303H étant préféré. On peut aussi utiliser le Durastrength D300 ou D340 d'Arkema, présentant un coeur acrylique entouré d'une enveloppe PMMA. De même, on peut également utiliser les MBS développés par Rohm et Haas (Philadelphie, PA, Etats-Unis), notamment le Paraloid™ BTA 753.

Ces particules (i) peuvent être utilisées seules ou en mélange. Ainsi, dans un mode de réalisation particulier de l'invention, on utilise un mélange de particules MBS (en particulier les C303H, C301) et de particules présentant une enveloppe PMMA et un coeur acrylonitrile (notamment les particules D340).

De préférence, ces particules (i) sont présentes dans la composition dans une quantité comprise entre 2 et 20 % en poids de la composition, de préférence entre 5 et 15 % en poids.

Dans un mode de réalisation particulier, la composition contient également au moins un monomère ester acrylique (j) dans lequel la partie alcool présente une chaîne linéaire d'au moins 6 atomes de carbones (à chaîne longue). Ainsi, on utilise préférentiellement du méthacrylate de lauryle, du méthacrylate de 2-éthylhexyle, de l'acrylate de 2-éthylhexyle, des esters à base de polyéthylène-glycol, ou des mélanges de ces esters. Il est préférable que la composition contienne au plus 10 %, de façon plus préférée au plus 8%, voire au plus 5% en poids au total de ces monomères acryliques à chaîne longue. Dans un mode de réalisation particulier, la composition comprend un mélange de deux monomères esters acryliques à chaîne longue. De façon préférée, lorsque la composition ne contient qu'un seul monomère ester acrylique (h), il est préféré qu'il soit présent à une quantité inférieure ou égale à 8 % en poids, alors qu'il est acceptable qu'il y en ait à une quantité comprise entre 8 et 10 % lorsque la composition contient un mélange de ces esters (j). Dans ce cas, on préfère que chacun soit au plus présent à 5 %.

La composition peut également contenir d'autres monomères tels que l'acrylonitrile, le méthacrylonitrile, ou le styrène.

La composition selon l'invention peut également contenir un monomère acide tel qu'un monomère acide polymérisable par radicaux libres connu dans l'art du type acide carboxylique unsaturé, acide maléique, acide crotonique, acide isophtalique, acide fumarique. On peut également ajouter de l'isobornyl acrylate (IBXA), du 2-hydroxy-éthyl-méthacrylate (HEMA), du 2-hydroxypropylméthacrylate (HPMA), du 2-(perfluorooctyl)éthyl acrylate (POA), du tétrahydrofurfuryl acrylate (THFA), de l'isobutoxyméthylacrylamide (IBMA). On peut ajouter des mélanges de ces composés, notamment un mélange de HEMA et HPMA. On préfère l'acide méthacrylique ou l'acide acrylique, ou l'HEMA. On ajoute entre 2 et 10 % de ce composé, de préférence entre 3 et 7 %.

La composition selon l'invention peut également contenir, dans ses modes de réalisation préférés, au moins un composé supplémentaire tel qu'un agent de rhéologie. L'agent de rhéologie sert à garantir une bonne viscosité de la composition selon l'invention, afin qu'elle puisse être aisément appliquée sur les surfaces à coller. On peut utiliser des polyamides telles que le Disparlon 6500 (Kusumoto Chemicals Ltd, Japon) ou des éléments pulvérulents à base de silice ou équivalents (silice pyrogénée ou silice fumée non traitée).

La composition peut également contenir des ions métalliques, ainsi que d'autres composés tels que de la saccharine (édulcorant autorisé au niveau européen sous le numéro E-954, aussi appelé 1,1-Dioxo-1,2-benzothiazol-3-one) ou ses dérivés (voir WO 87/000536), et/ou de l' 1-acétyl-2-phénylhydrazine (entre 0,1 % et 5% en poids).

D'autres éléments tels que des charges minérales (TiO₂, CaCO₃, Al₂O₃, phosphate de zinc), des agents résistants aux ultraviolets (tels que la 2-hydroxyphenyltriazine, Tinuvin 400 de Ciba-Geigy), de la cire, peuvent également être ajoutés à la composition selon l'invention. Des inhibiteurs de polymérisation à radicaux libres tels que le BHT, ou des benzoquinones comme la naphtoquinone, l'hydroquinone ou l'éthylhydroquinone peuvent aussi être ajoutés pour augmenter la durée de vie de la composition.

Dans un autre mode de réalisation, l'invention se rapporte à une composition comprenant un monomère ester méthacrylate, un accélérateur / initiateur de polymérisation comprenant une amine tertiaire de formule (I) telle que définie plus haut, et de la saccharine (ou un dérivé de la saccharine). Dans ce mode de réalisation, il peut être avantageux que cette composition contienne un monomère acide, notamment l'HEMA. Dans ce mode de réalisation, la présence du promoteur d'adhésion (b) est préférée, mais non obligatoire. Dans ce mode de réalisation, la composition peut également contenir les éléments (d) à (j) tels que décrits plus haut, ainsi que les autres éléments mentionnés plus haut.

Ainsi que mentionné plus haut, les adhésifs structuraux sont formés de deux éléments qui sont une composition selon l'invention et un agent catalyseur permettant la polymérisation et la prise de l'adhésif. Ces deux éléments sont stockés dans deux compartiments différents et sont mélangés lors de l'application de l'adhésif.

Ainsi que mentionné, on choisit un agent catalyseur qui est un initiateur de polymérisation à radicaux libres, en particulier à base de peroxyde. De tels agents sont bien connus dans l'art. On peut notamment choisir le peroxyde de benzoyle, le tertbutylperoxybenzoate, l'hydroperoxyde de cumène. On préfère lorsque l'agent catalyseur contient entre 5 et 40 % en poids de peroxyde, en particulier environ 20 % en poids de peroxyde. On utilise notamment une pâte contenant environ 20 % de peroxyde de benzoyle. Cet agent catalyseur est notamment contenu dans un plastifiant comme le di-isobutyl phthalate ou le benzyle phthalate.

On utilise l'agent catalyseur dans un ratio de 1 : 1 à 1 : 30 (en volume), de préférence de 1 : 5 à 1 : 30 de façon encore plus préférée environ 1 : 10 par rapport au second élément qui est la composition selon l'invention.

L'invention se rapporte ainsi à l'utilisation combinée d'une composition selon l'invention et d'un agent catalyseur comprenant un amorceur de polymérisation radicalaire de type peroxyde dans un procédé d'adhésion d'un matériau sur un second matériau, et notamment lorsqu'au moins un des matériaux est métallique.

L'utilisation d'une composition selon l'invention et d'un agent catalyseur permet donc d'effectuer des collages de métaux, plastiques, matériaux composites sur du composite et trouve ainsi son application notamment dans le domaine de la construction de silos, de bateaux ou de remorques de camions. On peut également l'utiliser dans le domaine de la construction automobile, ou le domaine ferroviaire.

Ainsi, la composition permet l'adhésion d'un matériau sur un autre matériau, l'un ou l'autre matériau étant notamment un métal, un plastique, du bois ou un matériau composite. On peut donc utiliser la composition dans l'une ou l'autre des applications suivantes : adhésion métal / métal, métal / composite, métal / plastique, métal / bois, bois / plastique, bois / composite, bois / bois, plastique / composite, plastique / plastique ou composite / composite.

La composition selon l'invention est aussi particulièrement intéressante lorsqu'il convient de coller un matériau sur un matériau composite ou métallique.

Les adhésifs structuraux méthacrylates souples à hautes performances mécaniques obtenus avec la composition selon l'invention sont résilients, résistent aux chocs et aux vibrations. Ils permettent de réaliser des assemblages par collage entre matériaux d'une même nature chimique ou différents par exemple : bétons, bois, céramiques, verres, ferrites, aluminium, aluminium anodisé, acier, acier galvanisé, acier inoxydable, métaux peints, acier, cuivre, zinc, abs, pvc, polyester, acryliques, polystyrène, Gel Coat polyester ou époxydes, matériaux composites, composites renforcés de fibres de verre, stratifiés, nids d'abeilles, et de tout matériau peint ou laqué. Les adhésifs structuraux obtenus avec la composition selon l'invention sont particulièrement intéressants pour le collage de l'acier galvanisé ou de l'acier électro-zingué.

Ils peuvent également combler des jeux importants entre les substrats, d'épaisseurs, de rugosités, de planéités différentes et variables avec une meilleure répartition des contraintes.

La souplesse de cette composition permet ainsi de reprendre les efforts des dilatations différentielles entre les substrats sur des longueurs importantes de plusieurs mètres, en diminuant et en annulant les défauts de géométrie (angle, rugosité, planéité).

Les applications et secteurs d'activités concernés comprennent notamment :
Collage de renforts, rails, charpentes, poutres, raidisseurs, panneaux, cloisons, fixations, supports, éléments de carrosserie, équerres de renfort, inserts, éléments cylindriques et coniques, charnières, cadres, etc. Collage avec reprise de stratification sur cloison, collage avec remplissage nécessitant une tenue mécanique élevée.

Notamment collage de tout élément de structure ou mécanique collés dans la construction navale, automobile, ferroviaire (et infrastructures), aéronautique, aérospatiale, d'équipements électroniques, électromécaniques, d'électroménager, de structures militaires, d'enseignes, de panneaux de signalisation (et publicitaires), de mobiliers urbains, de menuiseries extérieures (fenêtres, baies vitrées, portes-fenêtres, portes d'entrée et de garages), d'éoliennes, containers, d'ouvrages d'art et d'infrastructure (notamment les ponts suspendus, plates-formes pétrolières offshore, aérogares), construction et fixation et de façade d'immeuble et de panneaux solaires.

Lorsque l'adhésif produit avec une composition selon l'invention présente une montée en gel rapide, ceci permet de résoudre les problématiques suivantes :
- collage d'aimant dans la fabrication de haut-parleur : la montée rapide en temps de gel sur la ligne de montage permet en effet d'immobiliser ou figer les pièces rapidement sans qu'elles aient le temps de glisser l'une sur l'autre avec une cadence de fabrication élevée permettant la réalisation d'un collage toutes les 2 minutes au lieu de 4 minutes.
- Collage d'aimant (fabrication de moteurs d'essuie-glace, petits moteurs), assemblage de composants électronique,
- Collage d'inserts de rétroviseur sur pare-brise : métal et plastique sur verre feuilleté. (pour la réparation, l'opérateur ne doit pas maintenir plus d'une à deux minutes l'insert sur le verre)
- Collage d'insert à la vertical sur des supports en métaux et composites : insert inox mâle sur une plaque carrée de 32 x 32 mm sur laquelle est soudée une douille taraudée :il s'agit d'un insert mâle avec une plaque perforée de diamètre 38 mm sur laquelle est soudée une goujon fileté M6 de longueur 25 mm (voir notamment les inserts BIGHEAD® (Bighead Bonding Fastener, Bournemouth, GB)). Le collage rapide avec un temps de gel est nécessaire pour éviter l'insert perforé de glisser sur le support vertical. La colle joue rapidement son rôle de rivet au niveau des perforations de l'insert.
- Positionnement rapide sur des lignes d'assemblage à forte cadence et sur de nombreux matériaux
- Positionnement et collage de cales,
- Assemblage rapide sur une chaîne de montage avec des jeux pouvant être élevés jusqu'à 5 mm et sur une multitude de matériaux :
   aluminium, acier, acier galvanisé, acier inoxydable, acier électro-zingué, bronze, acier laqué, thermoplastiques, verres, et matériaux composites,
- Collage sur bois et contre-plaqué, permettant d'éviter une absorption trop rapide des monomères par le bois.

### Exemples

Les exemples ci-dessous illustrent l'invention sans en restreindre la portée.

### Exemple 1 : matières premières utilisées et méthodologie

On utilise les éléments suivants :

### Composition

monomère ester méthacrylate (a) : méthacrylate de méthyle (MAM) / méthacrylate d'isobornyle / méthacrylate d'hydroxyéthyle élastomère liquide fonctionnalisé (f) : HYPRO™ VTB 2000xI68 (EPM, USA) monomère acide : acide méthacrylique (AMA)

promoteur d'adhésion (b) : méthacrylate phosphate Genorad 40 (Rahn AG) accélérateur de polymérisation (c) : 4,4',4" méthylidynetris (N, N-diméthylaniline) (LCV)

accélérateur de polymérisation (contrôle) : N, N diméthylaniline (DMA), ou diméthyl para-toluidine (DMPT)

toluidine (d) : N,N-bis-(2-hydroxyéthyle)-p-toluidine (PTE)

Dimétacrylate de Zinc (e) : SR 708 (Sartomer)

Charges : ions métalliques, agents de rhéologie, agents pulvérulents copolymère SIS (g) : Kraton D1160 (Kraton Polymers)

copolymère SIBS (h) : Kraton MD6455 (Kraton Polymers) 25

agent de rhéologie : Disparlon 6500 (Kusumoto Chemicals)

particules polymériques élastomériques (i) : Cleartrength C303H (Arkema)

### Agent catalyseur

peroxyde de benzoyle à 20 %.

Ratio de mélange composition : catalyseur = 10 : 1

La résistance au cisaillement par traction (RC) est mesurée selon la norme ISO 4587. Brièvement, on utilise des éprouvettes en aluminium 2024T3 de dimensions 100 x 25 x 1,6 mm (L x 1 x e). Deux éprouvettes sont collées l'une sur l'autre, la zone de recouvrement étant de 25 x 12 mm (300 mm²), avec une épaisseur du joint de colle d'environ 200 à 400 µm. On mesure ensuite la force nécessaire pour rompre l'adhésion en tirant sur les deux éprouvettes.

Afin d'être utilisable industriellement, il est préférable que l'adhésif soit manipulable pendant plusieurs minutes (ce qui correspond au temps de gel) et polymérise rapidement après la montée en gel. Il est favorable que le temps d'exothermie maximum soit rapproché du temps de gel pour que l'utilisateur puisse manipuler rapidement ses pièces.

On mesure également le temps de gel, ainsi que le pic d'exothermie maximum.

### Exemple 2 : utilisation d'une polyamine à haut poids moléculaire

On analyse les compositions suivantes :

| **Composants** | **A1** | **A2** | **A3** | **A4*** | **A5** |
|---|---|---|---|---|---|
| Méthacrylate de méthyle | 28.5 | 28.5 | 28.5 | 27.0 | 29.0 |
| VTB 2000x168 | 28.0 | 28.0 | 28.0 | 28.0 | 28.0 |
| Méthacrylate d'isobornyl | 5.5 | 5.5 | 5.5 | 5.5 | 5.5 |
| Méthacrylate d'hydroxyéthyle | 6.0 | 6.0 | 6.0 | 6.0 | 6.0 |
| Acide méthacrylique | 4.0 | 4.0 | 4.0 | 4.0 | 4.0 |
| Genorad 40 | 3.0 | 3.0 | 3.0 | 3.0 | 3.0 |
| SR 708 | - | - | - | 1.5 | - |
| DMA | 1.0 | - | - | - | - |
| DMPT PTE | | 1.0 | | | - |
| LCV | - | - | 1.0 | 1.0 | 0.5 |
| Charges | 24.0 | 24.0 | 24.0 | 24.0 | 24.0 |
| Temps de gel (sur 20 gr) | 9mm25 s | 4 mm 10 s | 54 s | 54 s | 2mn33s |
| Exothermie maximum | 15 min40s | 7min36s | 8min28s | 2min36s | 71 min48 s |
| | 108 °C | 116 °C | 119 °C | 109.5 °C | 89 °C |
| Résistance au cisaillement | 16.7 MPa | 15.7 MPa | 15.3 MPa | 17.9 MPa | 15.8 MPa |
| Faciès de rupture | Cohésif 100% | Cohésif 100% | Cohésif 100% | Cohésif 100% | Cohésif 100% |

| | | | | | |
|---|---|---|---|---|---|
| * formulation selon l'invention | | | | | |

**Formulation A1** : utilise une amine telle que décrite dans l'art antérieur (contrôle).
**Formulation A2** : utilise une amine telle que décrite dans l'art antérieur (contrôle).
**Formulation A3** : le temps de montée en gel est très rapide, le pic d'exothermie étant plus éloigné.
**Formulation A4** : utilisation le SR 708 de Sartomer en combinaison avec le LVC : ce monomère diméthacrylate métallique accélère la vitesse de polymérisation (temps d'exothermie) et améliore les performances mécaniques.

Ces résultats montrent donc que l'utilisation d'une polyamine à haut poids moléculaire permet d'accélérer la montée en gel, tout en maintenant un pic d'exothermie éloigné de cette montée en gel. L'ajout de différents composants au mélange permet de contrôler la montée en gel et le pic d'exothermie, en maintenant ou en améliorant les performances mécaniques.

### Exemple 3 : Collage acier galvanisé trempé à chaud sur lui-même

Mesure de la résistance au cisaillement selon le protocole de la norme ISO 4587 (éprouvettes en acier galvanisé).

| **Composants** | **B1** | **B2** | **B3** | **B4** | **B5** |
|---|---|---|---|---|---|
| Méthacrylate de méthyle | 28.1 | 27.4 | 25.4 | 26.25 | 28.25 |
| 1,4 naphotquinone | 0.003 | 0.003 | 0.003 | 0.003 | 0.003 |
| VTB 2000x168 | 28.0 | 28.0 | 28.0 | 28.0 | 28.0 |
| Méthacrylate d'isobornyl | 5.5 | 5.5 | 5.5 | 5.5 | 5.5 |
| Méthacrylate d'hydroxyéthyle | 6.0 | 6.0 | 6.0 | 6.0 | 6.0 |
| Acide méthacrylique | 4.0 | 4.0 | 4.0 | 4.0 | 4.0 |
| Genorad 40 | 3.0 | 3.0 | 3.0 | 3.0 | 3.0 |
| Saccharine | - | - | 2.0 | 2.0 | - |
| DMA | - | 0.9 | 0.9 | - | - |
| PTE | 1.4 | 1.2 | 1.2 | 1.2 | 1.2 |
| LCV | 0.5 | - | - | 0.05 | 0.05 |
| Charges | 23.5 | 24.0 | 24.0 | 24.0 | 24.0 |
| Résistance au cisaillement | 15.7 MPa | 1.1 MPa | 9.3 MPa | 8.2 MPa | 1.5 MPa |
| Faciès de rupture | 100% Cohésif | 100% Adhésif | 100% Adhésif | 100% Adhésif | 100% Adhésif |

| | | | | | |
|---|---|---|---|---|---|
| NB la résistance au cisaillement de la formulation B1 est effectuée sur l'aluminium. Pour B1, temps de gel (sur 20gr) : 11mn 52s. Exothermie maximum : 14mn36s, 104°C. Le temps de montée en gel est ainsi retardé et est proche du temps d'exothermie maximum. Cet adhésif est particulièrement adapté à des utilisations dans le domaine du collage de grandes pièces. | | | | | |

### Exemple 4: Collage acier électro-zingué réalisé sur lui-même

Mesure de la résistance au cisaillement selon le protocole de la norme ISO 4587 (éprouvettes en acier électro-zingué).

| **Composants** | **C1** | **C2** | **C3** | **C4** | **C5** |
|---|---|---|---|---|---|
| Méthacrylate de méthyle | 49.997 | 49.997 | 47.997 | 47.997 | 48.797 |
| 1,4 naphotquinone | 0.003 | 0.003 | 0.003 | 0.003 | 0.003 |
| Kraton D 1160 | 16.0 | 16.0 | 16.0 | 16.0 | 16.0 |
| Kraton MD6455 | 5.0 | 5.0 | 5.0 | 5.0 | 5.0 |
| VTB 2000x168 | 7.0 | 7.0 | 7.0 | 7.0 | 7.0 |
| A2EH | 4.0 | 4.0 | 4.0 | 4.0 | 4.0 |
| HEMA | 4.0 | 4.0 | 4.0 | 4.0 | 4.0 |
| Genorad 40 | 2.0 | 2.0 | 2.0 | 2.0 | 2.0 |
| Acide méthacrylique | 4.0 | 4.0 | 4.0 | 4.0 | 4.0 |
| Saccharine | - | - | 2.0 | 2.0 | 2.0 |
| DMPT | 0.9 | - | - | 0.9 | - |
| DMA | - | 0.9 | 0.9 | - | - |
| LCV | - | - | - | - | 0.1 |
| PTE | 0.6 | 0.6 | 0.6 | 0.6 | 0.6 |
| ClearStrength 303H | 4.0 | 4.0 | 4.0 | 4.0 | 4.0 |
| Disparlon 6500 | 2.5 | 2.5 | 2.5 | 2.5 | 2.5 |
| Résistance au cisaillement | 1.3 MPa | 2.7 MPa | 19.1 MPa | 5.2 MPa | 18.3 MPa |
| Faciès de rupture | 100% Adhésif | 100% Adhésif | 100% Cohésif | 100% Adhésif | 100% Cohésif |

## Revendications

1. Composition utilisable dans un adhésif structural, ledit adhésif structural étant formé de ladite composition et d'un agent catalyseur comprenant un amorceur de polymérisation radicalaire de type peroxyde, ladite composition comprenant :
(a) au moins un monomère ester méthacrylate
(b) un promoteur d'adhésion à base d'ester de phosphate
(c) un accélérateur de polymérisation comprenant une amine tertiaire de formule 1 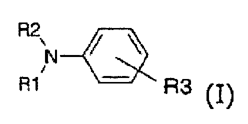 dans laquelle :
- le groupe R3 est un groupe électro-donneur par résonance comprenant au moins un groupe aromatique qui est susceptible de former avec le radical : 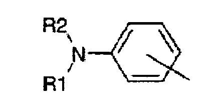
et en combinaison avec ledit amorceur de polymérisation radicalaire, un système conjugué présentant une absorption dans le domaine visible du spectre électromagnétique, pour générer la coloration dudit polymère ou dudit ciment au cours de la réaction de polymérisation dudit monomère,
- les groupements R1 et R2 sont respectivement et indépendamment :
• des groupes alkyle en C1 à C16, de préférence en C1 à C5, linéaires ou ramifiés,
• des groupes aryle ou arylalkyle en C5 à C30, de préférence en C5 à C10,
• des groupes alkylidène en C2 à C15, de préférence en C2 à C5,
ladite composition comprenant en outre un monomère acrylate métallique (e).

2. Composition selon la revendication 1, **caractérisée en ce qu'**elle comprend en outre un monomère acide polymérisable par radicaux libres.

3. Composition selon la revendication 2, **caractérisée en ce que** ledit monomère acide polymérisable par radicaux libres est choisi dans le groupe constitué de l'acide maléique, l'acide crotonique, l'acide isophtalique, l'acide fumarique, l'acide méthacrylique et l'acide acrylique.

4. Composition selon l'une des revendications 1 à 3, **caractérisée en ce qu'**elle comprend en outre au moins un composé choisi parmi l'isobomyl acrylate (IBXA), du 2-hydroxy-éthyl-méthacrylate (HEMA), du 2-hydroxypropylméthacrylate (HPMA), du 2-(perfluorooctyl)éthyl acrylate (POA), du tétrahydrofurfuryl acrylate (THFA), de l'isobutoxyméthylacrylamide (IBMA).

5. Composition selon l'une des revendications 1 à 4, **caractérisée en ce qu'**elle comprend un mélange de HEMA et HPMA.

6. Composition selon l'une des revendications 1 à 5, **caractérisée en ce que** ledit groupement R3 comprend au moins une amine tertiaire liée à un groupe aromatique.

7. Composition selon l'une des revendications 1 à 6, **caractérisée en ce que** le groupe R3 est un groupe de la forme : 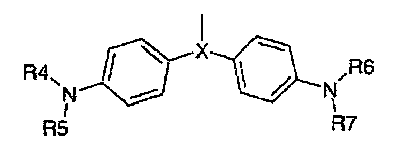 dans laquelle :
- X est choisi parmi : CH, N, et
- R4, R5, R6 et R7 sont choisis parmi :
• les groupes alkyle en C1 à C16, de préférence en C1 à C5, linéaires ou ramifiés,
• les groupes aryle ou arylalkyle en C5 à C30, de préférence en C5 à C10,
• les groupes alkylidène en C2 à C15, de préférence en C2 à C5.

8. Composition selon l'une des revendications 1 à 7, **caractérisée en ce que** ledit accélérateur de polymérisation répond à la formule :

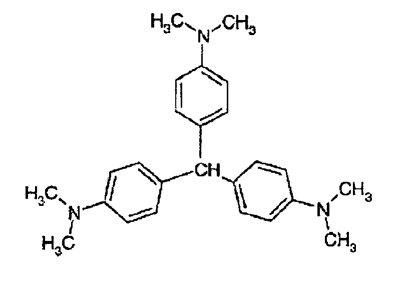

9. Composition selon l'une des revendications 1 à 8, caractérisée en que ledit promoteur d'adhésion à base d'ester de phosphate est méthacrylé.

10. Composition selon l'une des revendications 1 à 9, caractérisée en que ledit promoteur d'adhésion à base d'ester de phosphate est l'ester phosphate 2-hydroxyéthyl de méthacrylate ou un mélange d'esters mono and di-phosphate de 2-hydroxyéthyl de méthacrylate.

11. Composition selon l'une des revendications 1 à 10, **caractérisée en ce qu'**elle comprend également une amine (d) choisie parmi le groupe constitué des toluidines, anilines et phénols substitués ou non.

12. Composition selon l'une des revendications 1 à 11, **caractérisée en ce que** ledit monomère acrylate métallique (e) est choisi parmi les monomères diacrylate de zinc, diméthacrylate de zinc, monométhacrylate de zinc, diacrylate de fer, diméthacrylate de fer, monométhacrylate de fer, diacrylate de calcium, diméthacrylate de calcium, monométhacrylate de calcium, diacrylate de magnésium, diméthacrylate de magnésium, et monométhacrylate de magnésium.

13. Composition selon l'une des revendications 1 à 12, **caractérisée en ce qu'**elle contient en outre au moins un élastomère (f).

14. Composition selon la revendication 13, **caractérisée en ce que** ledit élastomère (f) est choisi parmi le polybutadiène fonctionnalisé ou non, le polyisoprène, et les mélanges de ces éléments.

15. Composition selon l'une des revendications 1 à 14, **caractérisée en ce qu'**elle contient en outre un copolymère bloc élastomérique contenant du styrène et au moins un second monomère (g).

16. Composition selon la revendication 15, **caractérisée en ce que** ledit second monomère du copolymère bloc élastomérique (g) est choisi parmi l'isoprène, le butadiène et l'éthylène

17. Composition selon la revendication 15 ou 16, **caractérisée en ce que** ledit copolymère bloc élastomérique (g) est un copolymère styrène - isoprène - styrène (SIS), et qu'elle contient en outre au moins un copolymère bloc élastomérique contenant du styrène et du butadiène ou de l'éthylène (h).

18. Composition selon la revendication 17, **caractérisée en ce que** ledit un copolymère bloc élastomérique (h) est choisi parmi un copolymère styrène - butadiène - styrène (SBS) et un copolymère styrène - isoprène - butadiène - styrène (SIBS).

19. Composition selon l'une des revendications 1 à 18, **caractérisée en ce qu'**elle comprend en outre des particules (i) formées d'une coquille thermoplastique et d'un coeur élastomérique.

20. Composition selon la revendication 19, **caractérisée en ce que** lesdites particules (i) sont choisies parmi les particules acrylonitrilc-butadiène-styrène, méthacrylate-butadiène-styrène, méthacrylate-acrylonitrile-butadiène-styrène, méthacrylate-acrylonitrile et les mélanges de celles-ci.

21. Composition selon l'une des revendications 1 à 20, **caractérisée en ce qu'**elle comprend également au moins un monomère ester acrylate (j) dans lequel la partie alcool présente au moins une chaîne linéaire d'au moins 6 atomes de carbones.

22. Composition selon la revendication 21, **caractérisée en ce qu'**elle contient un mélange de deux monomères acrylate (j).

23. Composition selon l'une des revendications 1 à 22, **caractérisée en ce qu'**elle contient également au moins un composé supplémentaire choisi parmi un agent de rhéologie, des ions métalliques, des charges minérales, des agents résistants aux ultraviolets, la cire, et des inhibiteurs de polymérisation à radicaux libres.

24. Composition selon l'une des revendications 1 à 23, **caractérisée en ce que** le monomère a) est choisi parmi le méthacrylate de méthyle et le méthacrylate d'éthyle.

25. Composition selon la revendication 24, **caractérisée en ce qu'**elle comprend également un monomère choisi parmi le méthacrylate de tétrahydrofurfuryle, le méthacrylate de phénoxyéthyle, le méthacrylate d'isobomyle, le méthacrylate de glycidylether, le méthacrylate de benzyle, le méthacrylate de cyclohexyle, le méthacrylate de triméthylcyclohéxyle, le méthacrylate d'hydroxyéthyle.

26. Utilisation combinée d'une composition selon l'une des revendications 1 à 25 et d'un agent catalyseur comprenant un amorceur de polymérisation radicalaire de type peroxyde dans un procédé d'adhésion d'un matériau sur un second matériau.

27. Utilisation selon la revendication 26, **caractérisé en ce qu'**au moins un matériau est métallique.

## Patentansprüche

1. Zusammensetzung, die in einem Strukturklebstoff verwendet werden kann, wobei der Strukturklebstoff aus der Zusammensetzung und einem Katalysator, der einen Radikalpolymerisationsinitiator vom Peroxid-Typ umfasst, gebildet wird, wobei die Zusammensetzung:
(a) mindestens ein Methacrylatester-Monomer,
(b) einen Haftvermittler auf Basis von Phosphatester,
(c) einen Polymerisationsbeschleuniger, umfassend ein tertiäres Amin der Formel I 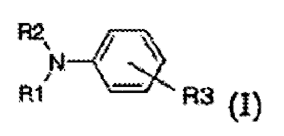 worin:
- die Gruppe R3 für eine durch Resonanz elektronenliefernde Gruppe steht, die mindestens eine aromatische Gruppe umfasst, die mit dem Rest: 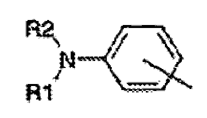
und in Kombination mit dem Radikalpolymerisationsinitiator ein konjugiertes System bilden kann, das eine Absorption im sichtbaren Bereich des elektromagnetischen Spektrums aufweist, zur Erzeugung der Färbung des Polymers oder Zements während der Polymerisationsreaktion des Monomers,
- die Gruppen R1 und R2 jeweils unabhängig voneinander für:
• lineare oder verzweigte C1- bis C16-und vorzugsweise C1- bis C5-Alkylgruppen
• C5- bis C30- und vorzugsweise C5- bis C10-Arylgruppen oder -Arylalkylgruppen,
• C2- bis C15- und vorzugsweise C2- bis C5-Alkylidengruppen
stehen,
umfasst,
wobei die Zusammensetzung außerdem ein Metallacrylat-Monomer (e) umfasst.

2. Zusammensetzung nach Anspruch 1, **dadurch gekennzeichnet, dass** sie außerdem ein radikalisch polymerisierbares Säuremonomer umfasst.

3. Zusammensetzung nach Anspruch 2, **dadurch gekennzeichnet, dass** das radikalisch polymerisierbare Säuremonomer aus der Gruppe bestehend aus Maleinsäure, Crotonsäure, Isophthalsäure, Fumarsäure, Methacrylsäure und Acrylsäure ausgewählt ist.

4. Zusammensetzung nach einem der Ansprüche 1 bis 3, **dadurch gekennzeichnet, dass** sie außerdem mindestens eine unter Isobornylacrylat (IBXA), 2-Hydroxyethylmethacrylat (HEMA), 2-Hydroxypropylmethacrylat (HPMA), 2-(Perfluoroctyl)ethylacrylat (POA), Tetrahydrofurfurylacrylat (THFA) und Isobutoxymethylacrylamid (IBMA) ausgewählte Verbindung umfasst.

5. Zusammensetzung nach einem der Ansprüche 1 bis 4, **dadurch gekennzeichnet, dass** sie eine Mischung von HEMA und HPMA umfasst.

6. Zusammensetzung nach einem der Ansprüche 1 bis 5, **dadurch gekennzeichnet, dass** die Gruppe R3 mindestens ein an eine aromatische Gruppe gebundenes tertiäres Amin umfasst.

7. Zusammensetzung nach einem der Ansprüche 1 bis 6, **dadurch gekennzeichnet, dass** die Gruppe R3 für eine Gruppe der Form: 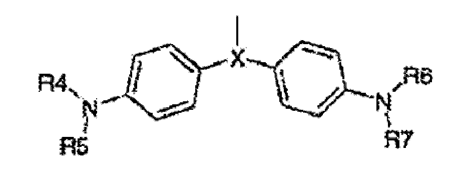 steht, worin:
- X unter CH und N ausgewählt ist und
- R4, R5, R6 und R7 unter:
• linearen oder verzweigten C1- bis C16- und vorzugsweise C1- bis C5-Alkylgruppen
• C5- bis C30- und vorzugsweise C5- bis C10-Arylgruppen oder -Arylalkylgruppen,
• C2- bis C15- und vorzugsweise C2- bis C5-Alkylidengruppen
ausgewählt sind.

8. Zusammensetzung nach einem der Ansprüche 1 bis 7, **dadurch gekennzeichnet, dass** der Polymerisationsbeschleuniger der Formel: 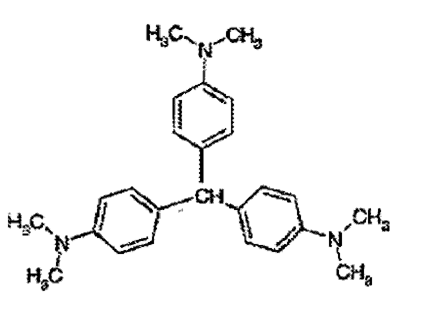 entspricht.

9. Zusammensetzung nach einem der Ansprüche 1 bis 8, **dadurch gekennzeichnet, dass** der Haftvermittler auf Basis von Phosphatester methacryliert ist.

10. Zusammensetzung nach einem der Ansprüche 1 bis 9, **dadurch gekennzeichnet, dass** es sich bei dem Haftvermittler auf Basis von Phosphatester um 2-Hydroxyethylmethacrylatphosphatester oder eine Mischung von 2-Hydroxyethylmethacrylatmonophosphatester and -diphosphatester handelt.

11. Zusammensetzung nach einem der Ansprüche 1 bis 10, **dadurch gekennzeichnet, dass** sie außerdem ein Amin (d) aus der Gruppe bestehend aus gegebenenfalls substituierten Toluidinen, Anilinen und Phenolen umfasst.

12. Zusammensetzung nach einem der Ansprüche 1 bis 11, **dadurch gekennzeichnet, dass** das Metallacrylat-Monomer (e) aus der Reihe der Monomere Zinkdiacrylat, Zinkdimethacrylat, Zinkmonomethacrylat, Eisendiacrylat, Eisendimethacrylat, Eisenmonomethacrylat, Calciumdiacrylat, Calciumdimethacrylat, Calciummonomethacrylat, Magnesiumdiacrylat, Magnesiumdimethacrylat und Magnesiummonomethacrylat ausgewählt ist.

13. Zusammensetzung nach einem der Ansprüche 1 bis 12, **dadurch gekennzeichnet, dass** sie außerdem mindestens ein Elastomer (f) enthält.

14. Zusammensetzung nach Anspruch 13, **dadurch gekennzeichnet, dass** das Elastomer (f) unter gegebenenfalls funktionalisiertem Polybutadien, Polyisopren und Mischungen dieser Bestandteile ausgewählt ist.

15. Zusammensetzung nach einem der Ansprüche 1 bis 14, **dadurch gekennzeichnet, dass** sie außerdem ein elastomeres Blockcopolymer (g), das Styrol und mindestens ein zweites Monomer enthält, enthält.

16. Zusammensetzung nach Anspruch 15, **dadurch gekennzeichnet, dass** das zweite Monomer des elastomeren Blockcopolymers (g) unter Isopren, Butadien und Ethylen ausgewählt ist.

17. Zusammensetzung nach Anspruch 15 oder 16, **dadurch gekennzeichnet, dass** es sich bei dem elastomeren Blockcopolymer (g) um ein Styrol-Isopren-Styrol-Copolymer (SIS-Copolymer) handelt und sie außerdem mindestens ein elastomeres Blockcopolymer (h), das Styrol und Butadien oder Ethylen enthält, enthält.

18. Zusammensetzung nach Anspruch 17, **dadurch gekennzeichnet, dass** das elastomere Blockcopolymer (h) unter einem Styrol-Butadien-Styrol-Copolymer (SBS-Copolymer) und einem Styrol-Isopren-Butadien-Styrol-Copolymer (SIBS-Copolymer) ausgewählt ist.

19. Zusammensetzung nach einem der Ansprüche 1 bis 18, **dadurch gekennzeichnet, dass** sie außerdem Teilchen (i) aus einer thermoplastischen Schale und einem elastomeren Kern umfasst.

20. Zusammensetzung nach Anspruch 19, **dadurch gekennzeichnet, dass** die Teilchen (i) unter Acrylnitril-Butadien-Styrol-, Methacrylat-Butadien-Styrol-, Methacrylat-Acrylnitril-Butadien-Styrol- und Methacrylat-Acrylnitril-Teilchen und Mischungen davon ausgewählt sind.

21. Zusammensetzung nach einem der Ansprüche 1 bis 20, **dadurch gekennzeichnet, dass** sie außerdem mindestens ein Acrylatester-Monomer (j), in dem der Alkoholteil mindestens eine lineare Kette mit mindestens 6 Kohlenstoffatomen aufweist.

22. Zusammensetzung nach Anspruch 21, **dadurch gekennzeichnet, dass** sie eine Mischung der beiden Acrylat-Monomere (j) enthält.

23. Zusammensetzung nach einem der Ansprüche 1 bis 22, **dadurch gekennzeichnet, dass** sie außerdem mindestens eine zusätzliche Verbindung, die unter einem Rheologiemittel, Metallionen, mineralischen Füllstoffen, UV-Stabilisatoren, Wachs und Radikalpolymerisationsinhibitoren ausgewählt ist, enthält.

24. Zusammensetzung nach einem der Ansprüche 1 bis 23, **dadurch gekennzeichnet, dass** das Monomer a) unter Methylmethacrylat und Ethylmethacrylat ausgewählt ist.

25. Zusammensetzung nach Anspruch 24, **dadurch gekennzeichnet, dass** sie außerdem ein unter Tetrahydrofurfurylmethacrylat, Phenoxyethylmethacrylat, Isobornylmethacrylat, Glycidylethermethacrylat, Benzylmethacrylat, Cyclohexylmethacrylat, Trimethylcyclohexylmethacrylat und Hydroxyethylmethacrylat ausgewähltes Monomer umfasst.

26. Kombinierte Verwendung einer Zusammensetzung nach einem der Ansprüche 1 bis 25 und eines Katalysators, der einen Radikalpolymerisationsinitiator vom Peroxid-Typ umfasst, bei einem Verfahren zum Verkleben eines Materials mit einem zweiten Material.

27. Verwendung nach Anspruch 26, dadurch gekennzeich-net, dass mindestens ein Material metallisch ist.

## Claims

1. Composition that can be used in a structural adhesive, said structural adhesive being formed from said composition and from a catalyst comprising a radical polymerization initiator of peroxide type, said composition comprising:
(a) at least one methacrylate ester monomer,
(b) a phosphate-ester-based adhesion promoter,
(c) a cure accelerator comprising a tertiary amine of formula I: 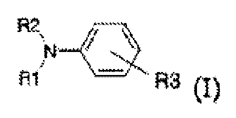 in which:
- the R3 group is a resonance electron-donating group comprising at least one aromatic group which is capable of forming, with the radical: 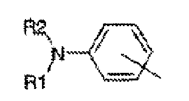
and in combination with said radical polymerization initiator, a conjugated system exhibiting an absorption in the visible field of the electromagnetic spectrum, for generating coloration of said polymer or of said cement during the reaction for polymerization of said monomer,
- the R1 and R2 groups are respectively and independently:
• linear or branched C₁ to C₁₆, preferably C₁ to C₅, alkyl groups,
• C₅ to C₃₀, preferably C₅ to C₁₀, aryl or arylalkyl groups,
• C₂ to C₁₅, preferably C₂ to C₅, alkylidene groups,
said composition also comprising a metallic acrylate monomer (e).

2. Composition according to Claim 1, **characterized in that** it also comprises an acid monomer that can be polymerized by free radicals.

3. Composition according to Claim 2, **characterized in that** said acid monomer that can be polymerized by free radicals is chosen from the group consisting of maleic acid, crotonic acid, isophthalic acid, fumaric acid, methacrylic acid and acrylic acid.

4. Composition according to one of Claims 1 to 3, **characterized in that** it also comprises at least one compound chosen from isobornyl acrylate (IBXA), 2-hydroxyethyl methacrylate (HEMA), 2-hydroxypropyl methacrylate (HPMA), 2-(perfluorooctyl)ethyl acrylate (POA), tetrahydrofurfuryl acrylate (THFA) and isobutoxymethylacrylamide (IBMA).

5. Composition according to one of Claims 1 to 4, **characterized in that** it comprises a mixture of HEMA and HPMA.

6. Composition according to one of Claims 1 to 5, **characterized in that** said R3 group comprises at least one tertiary amine linked to an aromatic group.

7. Composition as claimed in one of Claims 1 to 6, **characterized in that** the R3 group is a group of the form: 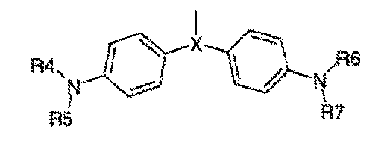 in which:
- X is chosen from: CH and N, and
- R4, R5, R6 and R7 are chosen from:
• linear or branched C₁ to C₁₆, preferably C₁ to C₅, alkyl groups,
• C₅ to C₃₀, preferably C₅ to C₁₀, aryl or arylalkyl groups,
• C₂ to C₁₅, preferably C₂ to C₅, alkylidene groups.

8. Composition according to one of Claims 1 to 7, **characterized in that** said cure accelerator corresponds to the formula:

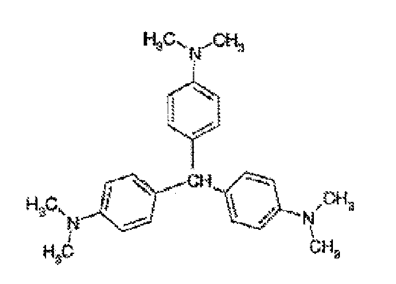

9. Composition according to one of Claims 1 to 8, **characterized in that** said phosphate-ester-based adhesion promoter is methacrylated.

10. Composition according to one of Claims 1 to 9, **characterized in that** said phosphate-ester-based adhesion promoter is the 2-hydroxyethyl methacrylate phosphate ester or a mixture of 2-hydroxyethyl methacrylate monophosphate and diphosphate esters.

11. Composition according to one of Claims 1 to 10, **characterized in that** it also comprises an amine (d) chosen from the group constituted of substituted or unsubstituted toluidines, anilines and phenols.

12. Composition according to one of Claims 1 to 11, **characterized in that** said metallic acrylate monomer (e) is chosen from zinc diacrylate, zinc dimethacrylate, zinc monomethacrylate, iron diacrylate, iron dimethacrylate, iron monomethacrylate, calcium diacrylate, calcium dimethacrylate, calcium monomethacrylate, magnesium diacrylate, magnesium dimethacrylate and magnesium monomethacrylate monomers.

13. Composition according to one of Claims 1 to 12, **characterized in that** it also contains at least one elastomer (f).

14. Composition according to Claim 13, **characterized in that** said elastomer (f) is chosen from functionalized or nonfunctionalized polybutadiene, polyisoprene, and blends of these components.

15. Composition according to one of Claims 1 to 14, **characterized in that** it also contains an elastomeric block copolymer containing styrene and at least one second monomer (g).

16. Composition according to Claim 15, **characterized in that** said second monomer of the elastomeric block copolymer (g) is chosen from isoprene, butadiene and ethylene.

17. Composition according to Claim 15 or 16, **characterized in that** said elastomeric block copolymer (g) is a styrene-isoprene-styrene (SIS) copolymer, and **in that** it also contains at least one elastomeric block copolymer containing styrene and butadiene or ethylene (h).

18. Composition according to Claim 17, **characterized in that** said one elastomeric block copolymer (h) is chosen from a styrene-butadiene-styrene (SBS) copolymer and a styrene-isoprene-butadiene-styrene (SIBS) copolymer.

19. Composition according to one of Claims 1 to 18, **characterized in that** it also comprises particles (i) formed from a thermoplastic shell and from an elastomeric core.

20. Composition according to Claim 19, **characterized in that** said particles (i) are chosen from acrylonitrile-butadiene-styrene, methacrylate-butadiene-styrene, methacrylate-acrylonitrile-butadiene-styrene and methacrylate-acrylonitrile particles, and mixtures thereof.

21. Composition according to one of Claims 1 to 20, **characterized in that** it also comprises at least one acrylate ester monomer (j) in which the alcohol part has at least one linear chain of at least 6 carbon atoms.

22. Composition according to Claim 21, **characterized in that** it contains a mixture of two acrylate monomers (j).

23. Composition according to one of Claims 1 to 22, **characterized in that** it also contains at least one additional compound chosen from a rheology modifier, metal ions, inorganic fillers, ultraviolet-resistant agents, wax, and free-radical polymerization inhibitors.

24. Composition according to one of Claims 1 to 23, **characterized in that** the monomer a) is chosen from methyl methacrylate and ethyl methacrylate.

25. Composition according to Claim 24, **characterized in that** it also comprises a monomer chosen from tetrahydrofurfuryl methacrylate, phenoxyethyl methacrylate, isobornyl methacrylate, glycidyl ether methacrylate, benzyl methacrylate, cyclohexyl methacrylate, trimethylcyclohexyl methacrylate and hydroxyethyl methacrylate.

26. Combined use of a composition according to one of Claims 1 to 25 and of a catalyst comprising a radical polymerization initiator of peroxide type in a method for adhesively bonding one material to a second material.

27. Use according to Claim 26, **characterized in that** at least one material is metallic.
